# EUROPÄISCHE PATENTANMELDUNG

(11) **EP 2 365 614 A2**
(43) Veröffentlichungstag der Anmeldung: **14.09.2011**
(21) Anmeldenummer: 11157840.7
(22) Anmeldetag: 11.03.2011
(51) Int. Cl.: H02K 5/128

(54) **Spaltrohrmotor mit Spaltrohrabstützung**

(30) Priorität: 13.03.2010 DE 102010011316
(71) Anmelder: KSB Aktiengesellschaft, 67227 Frankenthal (DE)
(72) Erfinder: Herr Prof. Dr. Huth, Gerhard, 97618, Hohenroth-Leutershausen (DE)

(57) **Zusammenfassung**

Die Erfindung betrifft einen Spaltrohrmotor, umfassend einen Rotor und einen Stator, wobei der Stator (1) Statorzähne (7) aufweist, deren Form offene Wickelnuten (9) bildet. Der Stator (1) ist mit einer Wicklung versehen, die als Zahnspulenwicklung (11) ausgeführt ist. Im Luftspalt zwischen Rotor und Stator (1) ist ein Spaltrohr (6) vorgesehen. Zur Unterstützung des Spaltrohres in den Bereichen der offenen Wickelnuten (9) sind Stützelemente (14) angeordnet, die T-förmig ausgestaltet sind.

## Beschreibung

Die Erfindung betrifft einen Spaltrohrmotor, umfassend einen Rotor und einen Stator, wobei der Stator Statorzähne aufweist, wobei offene Wickelnuten gebildet sind und der Stator mit einer Wicklung versehen ist, wobei ein Spaltrohr im Luftspalt zwischen Rotor und Stator vorgesehen ist, wobei Stützelemente in den offenen Wickelnuten angeordnet sind.

Es sind Spaltrohrmotoren für den Einsatz in hermetisch abgedichteten Pumpen bekannt. Durch den Einsatz eines Spaltrohres ist es möglich, alle drehenden Teile einer Pumpe und ihres Antriebs innerhalb eines geschlossenen Gehäuses unterzubringen. Hierdurch vereinfacht sich die Abdichtung der Pumpe erheblich. Spaltrohrmotoren, die zunehmend als permanentmagneterregte Synchronmotoren ausgeführt sind, besitzen ein Statorblechpaket mit einer in Nuten eingelegten Drehstromwicklung. Das Statorblechpaket besteht in der Regel aus gestanzten Elektroblechen, die zu einem Blechpaket paketiert sind. Zur sicheren Trennung des Fördermediums von der Umwelt befindet sich in der Statorbohrung ein Spaltrohr, das sich an den Stator abstützt. Wegen der bei einteiligen Statorblechpaketen offen ausgeführten Statornuten liegt das Spaltrohr nur im Zahnbereich an und im Bereich der Nutschlitze müssen Effekte wie Kerbung oder Materialfluss durch entsprechende Dimensionierung ausgeschlossen werden. Spaltrohre müssen deshalb oft metallisch mit entsprechender Wandstärke ausgeführt werden, auch wenn es das Fördermedium aufgrund einer nicht vorhandenen Korrosivität nicht verlangen würde.

Aus der DE 10324680 A1 ist ein Spaltrohrmotor bekannt, bei dem die Spulen und die Wickelköpfe des Stators in eine Vergussmasse gehüllt sind. Diese ermöglicht eine Abstützung des Spaltrohres und damit eine hohe Druckfestigkeit des Motors. Ein großer Nachteil ist dabei, dass das Vergießen des Stators sehr aufwändig ist.

Aus der DE 10232389 A1 ist ein Stator mit einer Kunststoffhülse bekannt, bei dem zwischen den Polschuhen eingebrachte Füllstücke derart angeordnet sind, dass diese unter Bildung einer geschlossenen Bohrung als Abstützung der Kunststoffhülse dienen. Nachteilig ist hier, dass für das Einbringen der einzelnen Füllstücke zwischen die Polschuhe ein erheblicher Aufwand nötig ist.

Der Erfindung liegt die Aufgabe zugrunde, einen Spaltrohrmotor für die Anwendung bei hermetischen Pumpen weiterzuentwickeln, bei dem auf einfache und kostengünstige Art hohe Arbeitsdrücke in der Pumpe realisierbar sind und der einfach und kostengünstig herstellbar ist.

Erfindungsgemäß wird die Aufgabe dadurch gelöst, dass bei dem Spaltrohrmotor die Wicklung des Stators als Zahnspulenwicklung ausgeführt ist und dass T-förmige Stützelemente in den Wickelnuten vorgesehen sind, wobei der vertikale Teil der Stützelemente benachbarte Zahnspulen voneinander trennt und der horizontale Teil der Stützelemente das Spaltrohr abstützt. Diese Stützelemente sind einfach herzustellen und in den Produktionsprozess einzubeziehen. Sie verlangen keine spezielle Geometrie des Statorzahns, da Elemente zur Führung des Magnetfeldes in das Stützelement eingearbeitet werden können. Hierdurch vereinfacht sich die Bestückung des Statorzahns mit Zahnspulen erheblich. Die Auslegung des Stützelements erfolgt nach den Anforderungen an die Drucksteifigkeit der vertikalen Stütze, die elektrische Isolierung und die Führung des Magnetfeldes am Ende der Statorzähne.

Von Vorteil ist dabei, dass durch den vertikalen Teil eine Isolierung benachbarter Wicklungen innerhalb einer Wickelnut ermöglicht wird. Ein weiterer Vorteil ist, dass dieser vertikale Teil eine mechanische Abstützung des Stützelements am Nutgrund ermöglicht. Dadurch kann der horizontale Teil des Stützelements dünner ausgelegt werden, da die Strecke, die überspannt werden muss durch die vertikale Stütze verringert wird.

In einer vorteilhaften Ausführungsform sind an den Enden der Statorzähne Ausnehmungen vorgesehen, in denen Stützelemente zentriert und gelagert werden. Von Vorteil ist dabei, dass die Position der Stützelemente eindeutig definiert ist. Sowohl beim Einbau in den Stator, als auch im laufenden Betrieb des Spaltrohrmotors, sind die Stützelemente in allen Raumrichtungen auf einen Ort festgelegt, ein Verrutschen wird durch die Ausnehmungen vermieden.

In einer weiteren vorteilhaften Ausführungsform bestehen die Stützelemente aus einem Verbundmaterial. Dies ermöglicht es, Stützelemente mit hoher mechanischer Stabilität herzustellen. Insbesondere ist der vertikale Teil der Stützelemente aus einem elektrischen Isolator hergestellt. Von Vorteil ist dabei, dass eine weitere elektrische Isolierung benachbarter Spulen, beispielsweise durch Aramidpapier, nicht notwendig ist.

Des Weiteren kann der horizontale Teil der Stützelemente aus magnetisch leitfähigem Material, insbesondere elektrisch isolierten Blechen oder Pulververbundwerkstoff, hergestellt sein. Von Vorteil ist dabei, dass das Magnetfeld in einer für den Motor vorteilhaften Weise geführt werden kann. Permeable Nutverschlusskeile können so eingespart werden.

In einer weiteren Ausführungsform sind die Stützelemente Kunststoffgussteile, wobei der Kunststoff magnetisierbare Partikel, insbesondere Ferritpartikel, enthalten kann. Von Vorteil ist, dass das Stützelement durch einfache Prozesse in nahezu beliebiger Form hergestellt werden kann, wobei die physikalischen Eigenschaften vorteilhaft für den Betrieb des Spaltrohmotors festgelegt werden können.

Des Weiteren ist eine erfindungsgemäße Ausführung des Spaltrohrmotors vorgesehen, bei der die Stützelemente einstückig mit dem Spaltrohr verbunden sind. Von Vorteil ist dabei, dass die Montage der Stützelemente und des Spaltrohres vereinfacht wird.

In einer weiteren Ausführungsform sind im Bereich der Wickelköpfe des Stators Stützringe vorgesehen. Von Vorteil ist dabei, dass das Spaltrohr entlang des gesamten Stators gleichmäßig abgestützt wird. Im Bereich der Wickelköpfe, wo kein Gegenlager durch ein Blechpaket vorhanden ist, wird eine Verformung des Spaltrohrs durch die Stützringe verhindert, insbesondere beim Auftreten hoher Arbeitsdrücke. Der Innendurchmesser der Stützringe entspricht dem Durchmesser der Statorbohrung, wobei die Anordnung der Stützringe so gewählt ist, dass sie mit der Statorbohrung fluchten.

In einer weiteren Ausführungsform ist das Spaltrohr aus Metall, insbesondere aus Edelstahl, hergestellt. Vorteilhaft ist dies besonders, wenn die Spaltrohrpumpe im Einsatz mit aggressiven Medien in Berührung kommt.

Für diese Variante mit dem metallischen Spaltrohr wird eine Ausführung vorgeschlagen, bei der die Stützelemente direkt an das Spaltrohr angegossen werden. Dies hat den Vorteil, dass bei der Montage nur ein Bauteil in den Stator eingebracht werden muss.

In einer weiteren vorteilhaften Ausführungsform wird der Stator nach dem Zusammenbau der Komponenten Blechpaket, Wicklung, Stützelemente und Spaltrohr mit einer Vergussmasse imprägniert. Von Vorteil ist dabei, dass die einzelnen Bauteile im Stator fixiert sind. Außerdem wird eine verbesserte elektrische Isolierung und Entwärmung des Stators erreicht.

Weitere Ausführungsformen ergeben sich aus der Kombination der bisher dargestellten und sind deshalb hier nicht weiter ausgeführt.

Im Rahmen der Erfindung liegt ebenfalls ein Kreiselpumpenaggregat, wobei dessen Antrieb durch einen erfindungsgemäßen Spaltrohrmotor gebildet ist.

Ein Ausführungsbeispiel für die erfindungsgemäße Vorrichtung ist in folgenden Figuren dargestellt. Es zeigen die
- Figur 1: einen Längsschnitt durch den Stator eines erfindungsgemäßen Spaltrohrmotors, die
- Figur 2: einen Ausschnitt des Stators mit einer ersten Variante des erfindungsgemäßen Spaltrohrmotors und die
- Figur 3: einen Ausschnitt des Stators mit einer zweiten Variante des erfindungsgemäßen Spaltrohrmotors.

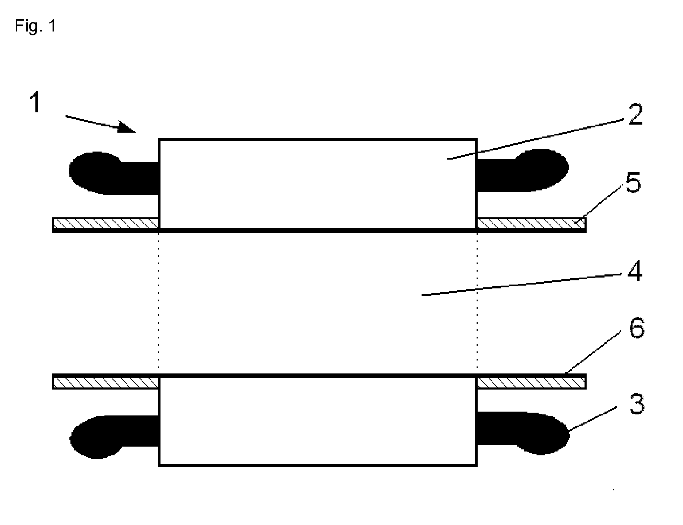

In der Figur 1 ist der Stator 1 eines erfindungsgemäßen Spaltrohrmotors gezeigt. Ein Blechpaket 2 ist mit Spulen bewickelt, wobei an den Enden Wickelköpfe 3 aus dem Blechpaket 2 herausragen. Ein im Stator 1 angeordnetes Spaltrohr 6 trennt den Stator 1 von der zugehörigen Statorbohrung 4. Um im Bereich der Wickelköpfe 3 ebenfalls für eine ausreichende Abstützung des Spaltrohrs 6 zu sorgen, ist an den beiden Enden des Stators 1 jeweils ein Stützring 5 vorgesehen. Die Stützringe 5 haben denselben Innendurchmesser wie die Statorbohrung 4 des Blechpakets 2 und werden in einer Flucht zu dieser ausgerichtet. Das Spaltrohr 6 liegt also an den Stützringen 5 und am Blechpaket 2 des Stators 1 an.

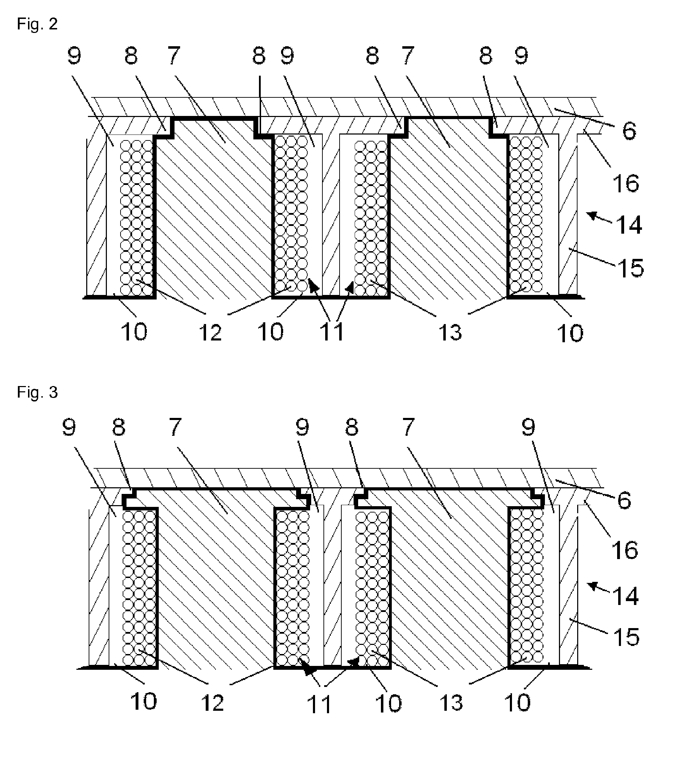

Die Figur 2 zeigt eine erste Variante der Erfindung. Dargestellt ist ein Schnitt durch den Stator 1 eines Spaltrohrmotors zur vereinfachten Anschauung in einer linearen Form. Der Stator 1 besteht aus Statorzähnen 7 mit dazwischen liegenden Wickelnuten 9. Die Statorzähne weisen Ausnehmungen 8 an ihren oberen Enden auf. Die beiden dargestellten Statorzähne 7 sind mit zwei Zahnspulen 12 und 13 bewickelt. Diese bilden einen Teil einer Zahnspulenwicklung 11. Ein erfindungsgemäßes T-förmiges Stützelement 14 umfasst einen horizontalen Teil 16, der die oben beschriebene abstützende Funktion für das Spaltrohr 6 übernimmt. Außerdem umfasst das Stützelement 14 einen vertikalen Teil 15, der die beiden Zahnspulen 12 und 13, die sich in einer Wickelnut 9 befinden, elektrisch isoliert. Zusätzlich dient dieser vertikale Teil 15 zur Abstützung des Stützelements 14 am Nutgrund 10. Hierdurch ist es möglich, den horizontalen Teil 16 des Stützelements 14 in geringerer Materialstärke auszuführen. In einer vorteilhaften Ausführung ist der vertikale Teil 15 des Stützelements 14 aus einem stabilen, elektrisch nicht leitenden Material hergestellt.

Der horizontale Teil 16 des Stützelements 14 überdeckt die Wickelnut 9, wobei zur räumlichen Fixierung Ausnehmungen 8 in den Statorzähnen 7 vorgesehen sind. Der horizontale Teil 16 des Stützelements 14 kann zur Führung des magnetischen Feldes als Polschuh ausgebildet sein. Hierzu besteht die Möglichkeit, den horizontalen Teil 16 aus elektrisch isolierten Blechen auszuformen. Hierdurch wird auch die zur Abstützung des Spaltrohrs 6 benötigte Stabilität erreicht. Alternativ lässt sich das Magnetfeld durch die Verwendung von Kunststoff, dem beispielsweise Ferritpartikel beigemischt sind, geeignet führen. Für diese Variante lässt sich das Stützelement 14 einstückig, beispielsweise als Spritzgussteil, herstellen.

Die Figur 3 zeigt eine weitere Variante der Erfindung in einer Schnittdarstellung, wobei der Statorausschnitt wieder linear dargestellt ist. Die Statorzähne 7 bilden teilweise geschlossene Wickelnuten 9. Die breit ausgeführten Enden der Statorzähne 7 verbessern die magnetischen Eigenschaften des Stators. Zur Auflage und Ausrichtung der Stützelemente 14 sind in den Enden der Statorzähne 7 die Ausnehmungen 8 vorgesehen. Diese Ausnehmungen sind bei dem horizontalen Teil 16 des Stützelements 14 durch entsprechende Gegenstücke in der Form berücksichtigt. Die T-förmigen Stützelemente 14 stützen sich zusätzlich am Nutgrund ab und verbessern damit die Stabilität.

Die in Figur 2 und Figur 3 dargestellten Varianten ermöglichen beide eine Ausführung des Spaltrohres 6, bei dem die Stützelemente 14 bereits einstückig eingearbeitet sind. Bei der Montage ist dann nur noch dieses um Stützelemente erweiterte Spaltrohr in den Stator einzufügen. Durch geeignete Wahl des Materials ist es möglich, mit dem einstückigen Bauteil aus Stützelementen 14 und Spaltrohr 6 das magnetische Feld, das von den Statorzähnen 7 gebildet wird, zu führen, wodurch die Laufeigenschaften des Spaltrohrmotors verbessert werden. Hierfür bietet es sich an, ein Verbundteil aus Eisenblechen, insbesondere Dynamoblechen, und Kunststoffen oder Kunststoff mit eingearbeiteten Ferritpartikeln zu verwenden.

### Bezugszeichenliste

- 1: Stator
- 2: Blechpaket
- 3: Wickelkopf
- 4: Statorbohrung
- 5: Stützring
- 6: Spaltrohr
- 7: Statorzahn
- 8: Ausnehmung
- 9: Wickelnut
- 10: Nutgrund
- 11: Zahnspulenwicklung
- 12: erste Zahnspule
- 13: zweite Zahnspule
- 14: Stützelement
- 15: vertikaler Teil
- 16: horizontaler Teil

## Patentansprüche

1. Spaltrohrmotor, umfassend einen Rotor und einen Stator, wobei der Stator (1) Statorzähne (7) aufweist, wobei offene Wickelnuten (9) gebildet sind und der Stator (1) mit einer Wicklung versehen ist, wobei ein Spaltrohr (6) im Luftspalt zwischen Rotor und Stator (1) vorgesehen ist, wobei Stützelemente (14) in den offenen Wickelnuten (9) angeordnet sind,
**dadurch gekennzeichnet, dass**
die Wicklung des Stators (1) als Zahnspulenwicklung (11) ausgeführt ist, und dass die Stützelemente (14) T-förmig sind, wobei die vertikalen Teile (15) der Stützelemente (14) am Nutgrund (10) abgestützt sind.

2. Spaltrohrmotor nach Anspruch 1, **dadurch gekennzeichnet, dass** an den Enden der Statorzähne (7) Ausnehmungen (8) vorgesehen sind, wobei die Stützelemente (14) in den Ausnehmungen (8) zentriert und gelagert werden.

3. Spaltrohrmotor nach Anspruch 1 bis 2, **dadurch gekennzeichnet, dass** die Stützelemente (14) aus einem Verbundmaterial bestehen.

4. Spaltrohrmotor nach einem der Ansprüche 1 bis 3, **dadurch gekennzeichnet, dass** zumindest der vertikale Teil (15) der Stützelemente (14) aus einem elektrischen Isolator hergestellt ist.

5. Spaltrohrmotor nach einem der Ansprüche 1 bis 4, **dadurch gekennzeichnet, dass** der horizontale Teil (16) der Stützelemente (14) aus magnetisch leitfähigem Material, insbesondere elektrisch isolierten Blechen oder Pulververbundwerkstoff, hergestellt ist.

6. Spaltrohrmotor nach einem der Ansprüche 1 bis 5, **dadurch gekennzeichnet, dass** die Stützelemente (14) Kunststoffgussteile sind, insbesondere enthält der Kunststoff magnetisierbare Partikel, insbesondere Ferritpartikel.

7. Spaltrohrmotor nach einem der Ansprüche 1 bis 6, **dadurch gekennzeichnet, dass** die Stützelemente (14) einstückig mit dem Spaltrohr (6) verbunden sind.

8. Spaltrohrmotor nach einem der Ansprüche 1 bis 7, **dadurch gekennzeichnet, dass** im Bereich der Wickelköpfe Stützringe (5) vorgesehen sind.

9. Spaltrohrmotor nach einem der Ansprüche 1 bis 8, **dadurch gekennzeichnet, dass** das Spaltrohr (6) aus Metall, insbesondere aus Edelstahl, hergestellt ist.

10. Spaltrohrmotor nach Anspruch 9, **dadurch gekennzeichnet, dass** die Stützelemente (14) direkt an das metallische Spaltrohr (6) angegossen sind.

11. Spaltrohrmotor nach Anspruch 9, **dadurch gekennzeichnet, dass** der Stator (1) bestehend aus Zahnspulenwicklung (11), Stützelementen (14), Stützringen (5) und Spaltrohr (6) mit einer Vergussmasse imprägniert ist

12. Kreiselpumpenaggregat, **gekennzeichnet durch** einen Spaltrohrmotor nach einem der Ansprüche 1 bis 11.
